# EUROPÄISCHE PATENTSCHRIFT

(11) **EP 2 959 977 B1**
(45) Veröffentlichungstag und Bekanntmachung des Hinweises auf die Patenterteilung: **03.10.2018**
(21) Anmeldenummer: 15165986.9
(22) Anmeldetag: 30.04.2015
(51) Int. Cl.: B04B 3/02, B04B 11/06

(54) **DOPPELSCHUBZENTRIFUGE SOWIE SCHUBBODENEINRICHTUNG**
DOUBLE PUSHER CENTRIFUGE AND PUSHER BASE DEVICE
CENTRIFUGEUSE À POUSSOIR DOUBLE AINSI QUE SYSTÈME DE PLANCHER COULISSANT

(30) Priorität: 24.06.2014 EP 14173652
(43) Veröffentlichungstag der Anmeldung: 30.12.2015
(73) Patentinhaber: Ferrum AG, 5102 Rupperswil (CH)
(72) Erfinder: Keller, Nik, 8307 Effrektion (CH)
(74) Vertreter: Intellectual Property Services GmbH

(56) Entgegenhaltungen:
- EP-A1- 0 635 309
- DE-A1- 2 706 501
- DE-C1- 4 308 749

## Beschreibung

Die Erfindung betrifft eine Doppelschubzentrifuge, sowie eine Schubbodeneinrichtung für eine Doppelschubzentrifuge gemäss dem Oberbegriff der unabhängigen Ansprüche 1 und 11.

Zur Trocknung feuchter Substanzen oder feuchter Substanzgemische sind Zentrifugen in den verschiedensten Ausführungsformen weit verbreitet und werden auf den verschiedensten Gebieten eingesetzt. So kommen beispielsweise zur Trocknung hochreiner pharmazeutischer Produkte diskontinuierlich arbeitende Zentrifugen, wie Schälzentrifugen, bevorzugt zum Einsatz, während insbesondere dann, wenn kontinuierlich grosse Mengen eines fest-flüssig Gemischs getrennt werden sollen, kontinuierlich arbeitende Schubzentrifugen vorteilhaft eingesetzt werden. Dabei kommen je nach Anforderung ein- oder mehrstufige Schubzentrifugen, sowie sogenannte Doppelschubzentrifugen zum Einsatz.

Bei den verschiedenen Typen der zuletzt genannten Klasse von Schubzentrifugen wird ein fest-flüssig Gemisch, beispielsweise eine Suspension oder ein feuchtes Salz oder Salzgemisch, durch ein Einlaufrohr über einen Gemischverteiler einer schnell rotierenden Siebtrommel zugeführt, die ein Filtersieb umfasst, so dass auf Grund der wirkenden Fliehkräfte die flüssige Phase durch das Filtersieb ausgeschieden wird, während im Inneren an der Trommelwand ein Feststoffkuchen abgeschieden wird. Dabei ist in der rotierenden Trommel eine im wesentlichen scheibenförmige, synchron mitrotierende Schubbodeneinrichtung angeordnet, die in der Siebtrommel mit einer gewissen Amplitude in axialer Richtung oszilliert, so dass ein Teil des getrockneten Feststoffkuchens an einem Ende der Siebtrommel herausgeschoben wird. Bei der entgegengesetzten Bewegung der Schubbodeneinrichtung wird ein an die Schubbodeneinrichtung angrenzender Bereich der Trommel freigegeben, der dann wieder mit neuem Gemisch beschickt werden kann.

Doppelschubzentrifugen haben dabei gegenüber den ein- oder mehrstufigen Schubzentrifugen den Vorteil, dass während der axialen Ausstossbewegung, die die Schubbodeneinrichtung in eine Richtung macht um den Feststoffkuchen auszustossen, auf der Rückseite der Schubbodeneinrichtung ein Leerraum an der Siebtrommel entsteht, in den frisches Gemisch zum Entfeuchten eingebracht werden kann. Durch geeignetes Umsteuern der Einspeisung mit Gemisch auf die jeweilige Gegenseite der Schubbodeneinrichtung kann so kontinuierlich Gemisch in die Siebtrommel eingebracht werden.

So lehrt z.B. die EP 0 068 095 A2 eine Doppelschubzentrifuge mit einer mittigen Durchgangsöffnung an der Schubbodeneinrichtung, deren Kante als Steuerkante verwendet wird, um zwangsläufig in Abhängigkeit von der Stellung des Schubbodens das Gemisch von einer ortsfesten radialen Einspeisung auf die Vorder- bzw. Rückseite der Schubbodeneinrichtung umzusteuern. Dabei ist es wesentlich, dass die beiden Trommelhälften vor und hinter der Schubbodeneinrichtung mit gleichen Mengen an Gemisch beaufschlagt werden. Die axiale Position der radialen Einspeisung muss daher sehr exakt eingestellt werden, wobei die Stellung experimentell über die Messung der beiden Gemischströme aufwändig gesucht werden muss.

Die Nachteile einer Zentrifuge gemäss EP 0 068 095 A2 liegen auf der Hand: bei verschleissenden Produkten können langfristig Veränderungen in der Geometrie des Einlaufrohrs zu einer ungleichen Verteilung des Gemischs führen. Ausserdem führen natürliche Schwankungen bei der Menge des eingespeisten Gemisch zu einer ungleichmässigen Verteilung des Gemisch im Bereich vor und hinter der Schubbodeneinrichtung. Im Prinzip lassen sich derartige Mengenschwankungen zwar durch eine erhöhte Drosselung des Gemischtroms am Austritt der radialen Einspeisung verhindern. Allerdings muss für eine ausreichende Drosselung die notwendige Zulaufhöhe vorhanden sein. Und anderseits besteht bei einer verkleinerten Austrittsöffnung die Gefahr des Rückstaus von Gemisch und letztendlich auch die Gefahr des Verstopfens.

Diese Nachteile sind bereits vor langer Zeit klar erkannt worden. Mit der EP 0 635 309 A1 wurde daher eine Doppelschubzentrifuge vorgeschlagen, die beidseitig in einem äusseren Ringbereich der Schubbodeneinrichtung mehrere axiale Durchtrittsöffnungen aufweist, die den Bereich vor und hinter der Schubbodeneinrichtung verbinden und welche jeweils vom Zentrum der Schubbodeneinrichtung her über zugehörige radiale Anspeiseöffnungen innerhalb der Schubbodeneinrichtung anspeisbar sind und welche das Gemisch beidseitig in die axiale Richtung umleiten, um es entgegen der Ausstossbewegung der Schubbodeneinrichtung auf diejenige Trommelseite zu leiten, auf der die Schubbodeneinrichtung vom Feststoffkuchen entsprechend wegläuft.

Zum besseren Verständnis der vorliegenden Erfindung wird im Folgenden kurz die Erfindung gemäss EP 0 635 309 A1 beschrieben, die sich in der Praxis zwar sehr erfolgreich zur Behebung der oben beschriebenen Probleme bewährt hat, jedoch, wie sich später gezeigt hat ebenfalls noch Verbesserungspotential besitzt, was durch die vorliegende Erfindung ausgeschöpft wird.

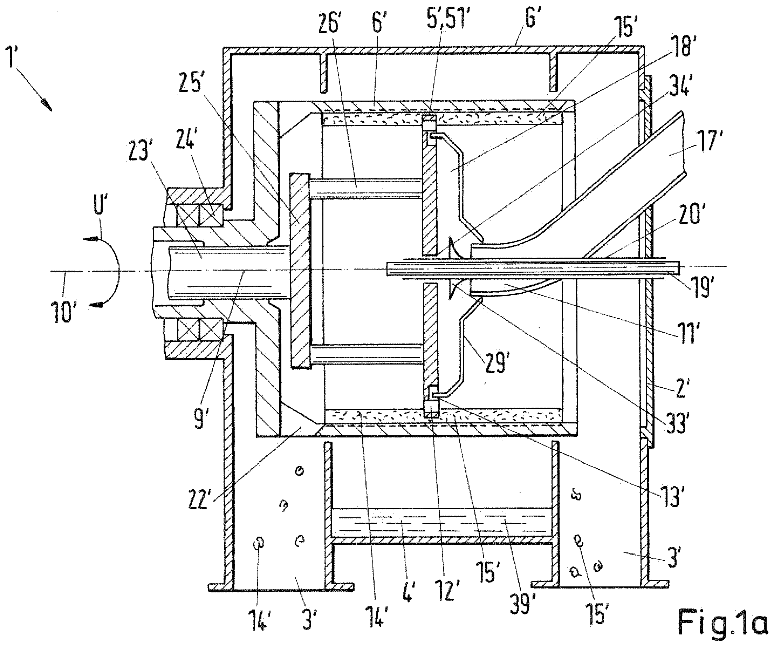

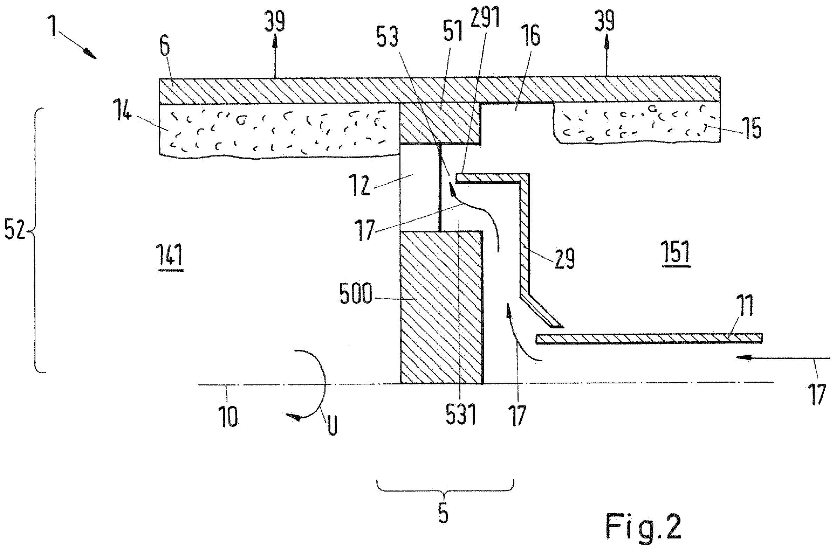

Zur besseren Unterscheidung der vorliegenden Erfindung vom Stand der Technik gemäss Fig. 1a bis Fig. 1d tragen die Bezugszeichen der Fig. 1a bis Fig. 1d, die auf Merkmale der bekannten Lösung gemäss EP 0 635 309 A1 verweisen, ein Hochkomma, während die Bezugszeichen der nachfolgenden Figuren 2 bis 7, die sich auf erfindungsgemässe Ausführungsbeispiele beziehen, kein Hochkomma tragen.

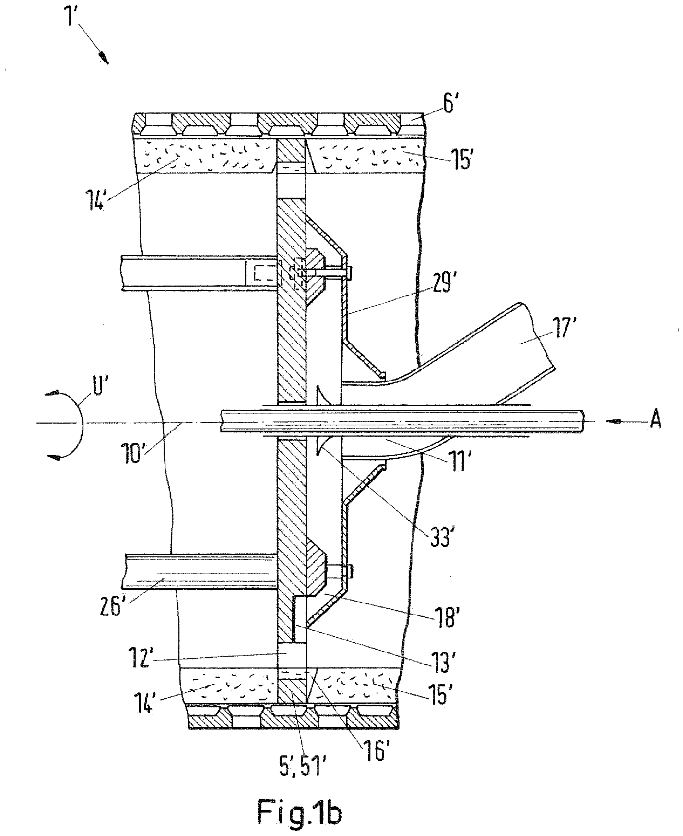

Die bekannte Doppelschubzentrifuge 1' gemäss Fig. 1a bzw. Fig. 1b, anhand derer die Schubbodeneinrichtung 5' der Fig. 1a etwas detaillierter in einem Ausschnitt darstellt ist, umfasst eine Siebtrommel 6', die einseitig über Lager 24' in einem Gehäuse G' gelagert ist. In einem mittleren Bereich des Gehäuses G' ist ein Filtratgehäuse 4' vorgesehen, in welchem auszentrifugierte Flüssigkeit 39' gesammelt wird, während der Feststoffkuchen 14', 15' von einer axial oszillierenden Schubbodeneinrichtung 5' jeweils entlang der Trommelmantelfläche gegen aussen in ein entsprechendes Feststoffgehäuse 3' verschoben wird. Lagerseitig sind mehrere Abgangsöffnungen 22' für den hinteren Feststoffkuchen 14' in der Siebtrommel vorgesehen. Die Schubbodeneinrichtung 5' selbst ist über Bolzen 26' und eine Schubnabe 25' mit einer Kolbenstange 23' verbunden, die ihrerseits in der Achse 9' der Siebtrommel 6' axial beweglich gelagert ist, um während der Rotation um die Rotationsachse 10' mit der Siebtrommel 6' eine axial oszillierende Bewegung vorzunehmen, die von der Schubbodeneinrichtung 5' an ihrer Peripherie auf die Feststoffkuchen 14', 15' übertragen wird. Das Gehäuse 1' ist mit einem Gehäusedeckel 2' verschlossen. Am Gehäusedeckel 2' ist eine Einspeiseeinheit 11' in Form eines Rohrs für ein Gemisch 17' vorgesehen, das koaxial von einem Stützrohr 20' an einem Austritt durchstossen wird, wobei das Stützrohr 20' einen Abweiser 33' trägt, der das Gemisch 17' in die radiale Richtung umlenkt. Das Stützrohr 20' erreicht durch einen zentralen Durchbruch 34' in der Schubbodeneinrichtung 5' den hinteren Raum der Siebtrommel 6' und ermöglicht es über ein oder mehrere innenliegende Rohre 19' Spül oder Waschflüssigkeit in den hinteren Raum einzubringen.

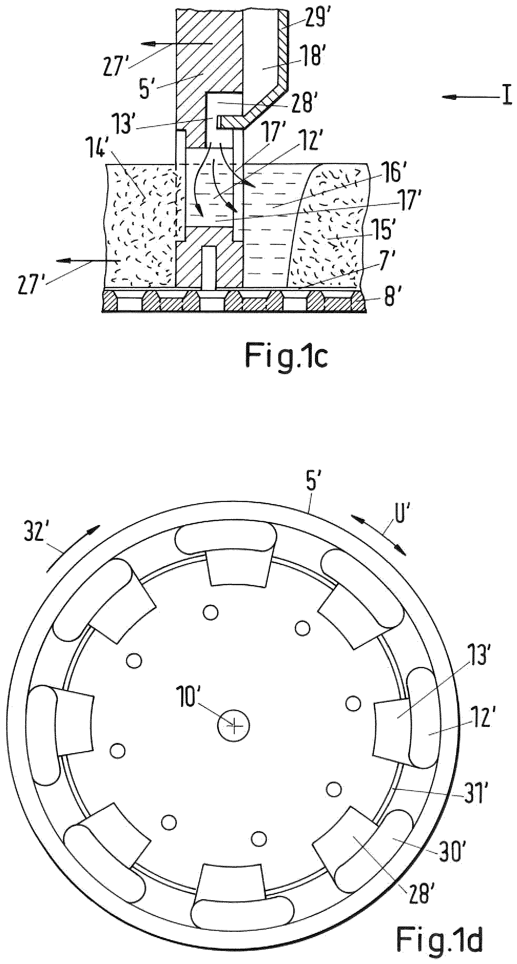

Durch einen auf der Vorderseite der Schubbodenvorrichtung 5' aufgesetzten Deckel 29' ist ein Ringraum 18' erzeugt, von dem mehrere radiale Einspeiseöffnungen 13' jeweils in axiale Durchtrittsöffnungen 12' übergehen, welche in einem äusseren Ringbereich 51' der Schubbodeneinrichtung 5' im Bereich der Filterkuchen 14', 15' angeordnet sind. Im Betriebszustand wird Gemisch 17' im Bereich zwischen dem vorgezogenen Deckelrand und dem eigentlichen Schubboden radial eingebracht und weiter über die Reibung an den Wänden in einen Ringraum 18' beschleunigt in dem, wie der Fig. 1c zu entnehmen ist, Schikanen in Form von Taschen 28' angeordnet sind, um das Gemisch in den Taschen 28' auf Umfangsgeschwindigkeit zu beschleunigen. Zwischen dem Deckel 29' und den Taschen 28' sind jeweils die radialen Anspeiseöffnungen 13' ausgespart, durch die das Gemisch 17' jeweils in axiale Durchtrittsöffnungen 12' gelangt, welche den vorderen und hinteren Raum der Siebtrommel 6' verbinden.

Im Betriebszustand versucht sich das Gemisch 17' in beide Richtungen axial und in Umfangsrichtung U' am Austritt aus den Durchtrittsöffnungen 12' zu verteilen, wobei auf der Seite in Richtung der Ausstossbewegung 27' der abgesetzte Filterkuchen 14' entgegensteht, während auf der entgegengesetzten Seite ein Leerraum 16' entsteht, in den neues Gemisch 17' eingebracht werden kann.

Anhand der Fig. 1c bzw. Fig. 1d, die eine Draufsicht auf die Schubbodeneinrichtung 5' bei abgenommenem Deckel 29' aus Richtung I gemäss Fig. 1c zeigt, ist eine axiale Durchtrittsöffnung 12' etwas genauer im Detail gezeigt, die einen ganzen Ringspaltabschnitt 30' gemäss Fig. 1d einnimmt. Dabei sind die Taschen 28' in Drehrichtung 32' vorversetzt, um ein gleichmässigeres Einfliessen im Ringspaltquerschnitt 30 zu bewirken. Der Deckel 29' stützt sich in dem eigentlichen Schubboden an einem Einstich 31' mit einer Schulter ab, die gleichzeitig im Bereich der Taschen 28' eine Begrenzung für die radialen Anspeiseöffnungen 13' bildet.

Obwohl durch die hier beschriebene bekannte Doppelschubzentrifuge gemäss EP 0 635 309 A1 die Eingangs beschriebenen Probleme bereits weitgehend behoben wurden, bestehen dennoch gewisse Probleme, die einer Verbesserung bedürfen.

Da der Deckel 29' in seiner Funktion als Einlaufscheibe immer in die Tasche 28' oberhalb der Durchtrittsöffnungen 12' hinreicht, werden sehr starke Beschleunigungskräfte auf das Gemisch 17' ausgeübt, was einen entsprechend starken Verschleiss in den Durchtrittsöffnungen 12' zur Folge hat und auch schädliche Auswirkungen auf das Produkt selbst haben kann. So wird das Gemisch 17' in kürzester Zeit auf die volle Umfangsgeschwindigkeit der Siebtrommel 6' beschleunigt. Insbesondere bei empfindlichen Substanzen kann das unter anderem zu Kornbruch führen, das heisst, dass beispielsweise Feststoffkörner, die in einer der Zentrifuge zugeführten Suspension verteilt sind, bei dem abrupten Beschleunigungsvorgang in unkontrollierter Weise in kleinere Stücke zerbersten, was negative Einflüsse auf die Qualität des produzierten Feststoffkuchens haben kann, wenn beispielsweise die Partikelgrösse der Körner im Endprodukt eine Rolle spielt.

Die Aufgabe der Erfindung ist es somit verbesserte Doppelschubzentrifuge bzw. eine verbesserte Schubbodenvorrichtung für eine Doppelschubzentrifuge bereitzustellen, mit welcher die eingangs beschriebenen Probleme mit dem abrupten Beschleunigen des zu entfeuchtenden Gemischs signifikant reduziert bzw. mehr oder weniger vollständig vermieden werden können.

Die diese Aufgaben lösenden Gegenstände der Erfindung sind durch die Merkmale der unabhängigen Ansprüche 1 und 11 gekennzeichnet.

Die jeweiligen abhängigen Ansprüche beziehen sich auf besonders vorteilhafte Ausführungsformen der Erfindung.

Die Erfindung betrifft somit eine Doppelschubzentrifuge zur Trennung eines Gemischs in einen Feststoffkuchen und eine Flüssigkeit, welche Doppelschubzentrifuge eine um eine Rotationsachse rotierbare Siebtrommel umfasst, in der eine Schubbodeneinrichtung entlang der Rotationsachse hin- und her bewegbar angeordnet ist, so dass der Feststoffkuchen im Betriebszustand mittels eines äusseren Ringbereichs der Schubbodeneinrichtung wechselseitig in der Siebtrommel verschiebbar ist. Dabei sind im äusseren Ringbereich der Schubbodeneinrichtung eine Mehrzahl von axialen Durchtrittsöffnungen vorgesehen, die einen vorderen Bereich und einen hinteren Bereich der Siebtrommel verbinden, wobei eine an einer Einlaufscheibe angeordnete Einspeiseeinheit vorgesehen ist, so dass das Gemisch über die Einspeiseeinheit und die Einlaufscheibe in den beim Verschieben des Feststoffkuchens auf der Siebtrommel entstehenden Leerraum einbringbar ist. Erfindungsgemäss ist zwischen einer Einlaufkante der Einlaufscheibe und einer Schubbodenplatte der Schubbodeneinrichtung mit Einlaufbereich ein in Umfangsrichtung nicht unterbrochener Einlaufspalt ausgebildet, über welchen das Gemisch in den Leerraum auf die Siebtrommel aufbringbar ist, wobei der Einlaufspalt (53) in Form einer umlaufenden Einlaufnut (531) in der Schubbodenplatte (52) ausgebildet ist.
Entscheidend für die vorliegende Erfindung ist, dass zwischen der Einlaufkante der Einlaufscheibe und der Schubbodenplatte der Schubbodeneinrichtung ein in Umfangsrichtung nicht unterbrochener Einlaufspalt ausgebildet ist, über welchen das Gemisch in den Leerraum auf die Siebtrommel aufbringbar ist. Wie später noch genauer beschrieben wird gibt es verschiedene Möglichkeiten den Einlaufspalt auszubilden und anzuordnen. Entscheidend ist in erster Linie, dass der Einlaufspalt einen in Umfangsring nicht unterbrochenen Spalt oder Kanal bildet. Dadurch kann das Gemisch viel sanfter vorbeschleunigt werden.
Wobei die Vorbeschleunigung des Gemischs abhängig von der konkreten Ausführungsform im Einlaufspalt selbst geschehen kann, z.B. dann wenn der Einlaufspalt in der Schubbodenplatte ausgebildet ist und die Einlaufkante in den Einlaufspalt hinreicht. Oder wenn die Einlaufscheibe in einem vorgebbaren Abstand vor der Schubbodenplatte ausgebildet ist, so dass der Einlaufspalt einfach durch einen Abstandsspalt, also durch den freien Raum zwischen Einlaufkante und Schubbodenplatte definiert ist. In dem Fall kann das Gemisch zumindest teilweise auf dem Produkt selbst, also auf dem Feststoffkuchen vorbeschleunigt werden und anschliessend durch die axialen Durchtrittsöffnungen in den Leerraum auf der Siebtrommel durchtreten.

In speziellen Fällen bietet sich auch eine Kombination dieser beiden Ausführungsvarianten an. Das heisst, es kann ein erster Einlaufspalt in der Schubbodenplatte ausgebildet sein, wobei die Einlaufkante jedoch nicht in den ersten Einlaufspalt hinreicht, wodurch automatisch ein zweiter Einlaufspalt zwischen Einlaufkante und Schubbodenplatte gebildet wird. Je nach dem wie der Abstand zwischen Einlaufkante und Schubbodenplatte justiert wird und die genaue Geometrie des ersten Einlaufspalts gewählt wird, kann mehr oder weniger Gemisch auf dem Produkt vorbeschleunigt werden bzw. es kann zu einer kombinierten Vorbeschleunigung im ersten Einlaufspalt und auf dem Feststoffkuchen kommen.

Ganz gleich welches Ausführungsbeispiel in der Praxis gewählt wird. Entscheidend ist in erster Linie, dass der Einlaufspalt einen in Umfangsrichtung nicht unterbrochenen Spalt oder Kanal bildet, wodurch das Gemisch viel sanfter vorbeschleunigt werden kann als z.B. bei einer Doppelschubzentrifuge gemäss EP 0 635 309 A1.

Die Doppelschubzentrifuge gemäss EP 0 635 309 A1 hat nämlich keinen umlaufenden Einlaufspalt gemäss der vorliegenden Erfindung. Vielmehr reicht der Deckel der Schubbodenvorrichtung in seiner Funktion als Einlaufscheibe immer in die Taschen oberhalb der Durchtrittsöffnungen hinein und die Taschen sind eben in Umfangsrichtung begrenzt und bilden somit keinen in Umfangsrichtung nicht unterbrochenen Einlaufspalt wie bei der vorliegenden Erfindung. Durch die Konstruktion gemäss EP 0 635 309 A1 werden vielmehr Schikanen für das einlaufende Gemisch gebildet, was dazu führt, dass sehr starke Beschleunigungskräfte auf das Gemisch ausgeübt werden, was einen entsprechend starken Verschleiss in den Durchtrittsöffnungen zur Folge hat und auch schädliche Auswirkungen auf das Produkt selbst haben kann, wie Eingangs detailliert beschrieben. Alle diese Nachteile und Probleme werden somit erstmals durch die Doppelschubzentrifuge der vorliegenden Erfindung zuverlässig vermieden.

In einem für die Praxis besonders wichtigen Ausführungsbeispiel kann zur weiteren Verbesserung der Vorbeschleunigung des Gemischs im Einlaufbereich der Schubbodeneinrichtung zusätzlich auch eine Vorbeschleunigungseinrichtung vorgesehen sein. Diese kann z.B. Flügel umfassen, die in geeigneter Weise geformt und angeordnet sind und dann ein sogenanntes Beschleunigungskreuz bilden. Die Flügel der Vorbeschleunigungseinrichtung können z.B. ausserhalb des Einlaufrohrs der Einspeiseeinrichtung spiralförmig gebogen oder in jeder anderen, dem Fachmann an sich bekannten Weise geeignet ausgestaltet sein.

Alternativ oder zusätzlich zur Vorbeschleunigungseinrichtung kann im Einlaufbereich der Schubbodeneinrichtung auch ein Verteilring, insbesondere zwischen der Vorbeschleunigungseinrichtung und der Siebtrommel vorgesehen sein, der es erlaubt das Gemisch gleichmässiger im Umfangsrichtung zu verteilen.

Je nach Gestaltung der Reinigung der Trommelrückseite kann in an sich bekannter Weise ein Spühlrohr zum Einbringen von Wasch- und/oder Spülflüssigkeit in die Siebtrommel vorgesehen sein, die sich durch die Einspeiseeinrichtung hindurch und durch die Schubbodeneinrichtung vom vorderen Bereich in den hinteren Bereich der Siebtrommel erstrecken kann.

Im speziellen kann die Schubbodeneinrichtung im äusseren Ringbereich doppelwandig ausgestaltet sein. Dabei kann der doppelwandig ausgestaltete Ringbereich in Richtung zur Siebtrommel mit einem Abschlussband versehen sein oder bei einem anderen Ausführungsbeispiel ist es auch möglich, dass die Durchtrittsöffnungen des doppelwandig ausgestalteten Ringbereich in Richtung zur Siebtrommel offen ausgebildet sind. Es versteht sich von selbst, dass auch bei einem nicht durchgehend doppelwandig ausgestalteten äusseren Ringbereich die Durchtrittsöffnungen in Richtung zur Siebtrommel offen ausgebildet sein können.

Als Verschleissschutz können darüber hinaus, wie an sich bereits bekannt, am äusseren Ringbereich Verschleissringe vorgesehen werden.

Des weiteren betrifft die Erfindung eine Schubbodeneinrichtung für eine Doppelschubzentrifuge der vorliegenden Erfindung. Die erfindungsgemässe Schubbodeneinrichtung für eine Doppelschubzentrifuge zur Trennung eines Gemischs in einen Feststoffkuchen und eine Flüssigkeit umfasst in einem äusseren Ringbereich eine Mehrzahl von axialen Durchtrittsöffnungen, die im Einbauzustand einen vorderen Bereich und einen hinteren Bereich einer Siebtrommel der Doppelschubzentrifuge verbinden. Die Schubbodenvorrichtung umfasst weiter eine Einlaufscheibe, so dass das Gemisch im Betriebszustand über die Einlaufscheibe in einen beim Verschieben des Feststoffkuchens auf der Siebtrommel entstehenden Leerraum einbringbar ist. Erfindungsgemäss ist zwischen einer Einlaufkante der Einlaufscheibe und einer Schubbodenplatte der Schubbodeneinrichtung mit Einlaufbereich ein in Umfangsrichtung nicht unterbrochener Einlaufspalt ausgebildet, über welchen das Gemisch im Betriebs- und Einbauzustand in den Leerraum auf die Siebtrommel aufbringbar ist.

Bei einem bevorzugten Ausführungsbeispiel ist der Einlaufspalt in Form einer umlaufenden Einlaufnut in der Schubbodenplatte ausgebildet, wobei der Einlaufspalt aber alternativ oder zusätzlich auch als Abstandsspalt zwischen der Einlaufkante und der Schubbodenplatte ausgebildet sein kann. Bevorzugt aber nicht notwendig erstreckt sich die Einlaufkante in die Einlaufnut hinein.

In der Praxis kann zur Vorbeschleunigung des Gemischs im Einlaufbereich der Schubbodeneinrichtung besonders vorteilhaft eine Vorbeschleunigungseinrichtung vorgesehen sein. Alternativ, aber besonders bevorzugt zusätzlich kann im Einlaufbereich noch ein Verteilring, insbesondere zwischen der Vorbeschleunigungseinrichtung und der Siebtrommel angeordnet werden.

Dabei kann die Schubbodeneinrichtung im äusseren Ringbereich beispielsweise doppelwandig ausgestaltet sein, wobei bevorzugt, aber nicht notwendig am doppelwandig ausgestalteten Ringbereich in Richtung zur Siebtrommel ein Abschlussband ausgebildet sein kann. Dabei ist es bei einem anderen Ausführungsbeispiel auch möglich, dass die Durchtrittsöffnungen des doppelwandig ausgestaltete Ringbereich in Richtung zur Siebtrommel offen ausgebildet sind, wobei offen ausgebildete Durchtrittsöffnungen selbstverständlich auch bei einem nicht durchgängig doppelwandig ausgestalteten Ringbereich möglich sind.

Um den Verschleiss am äusseren Ringbereich zu minimieren können ausserdem am äusseren Ringbereich in an sich bekannter Weise Verschleissringe vorgesehen werden.

Die Erfindung wird im Folgenden anhand der schematischen Zeichnung näher erläutert. Es zeigen:
- Fig. 1a: eine aus dem Stand der Technik bekannte Doppelschubzentrifuge;
- Fig. 1b: eine Detailzeichnung Schubbodeneinrichtung gemäss Fig. 1a;
- Fig. 1c: ein Detail gemäss Fig. 1b;
- Fig. 1d: Die Schubbodeneinrichtung gemäss Fig. 1c aus Blickrichtung aus Blickrichtung A.
- Fig. 2: ein erstes Ausführungsbeispiel einer erfindungsgemässen Doppelschubzentrifuge;
- Fig. 3: ein zweites Ausführungsbeispiel einer erfindungsgemässen Doppelschubzentrifuge;
- Fig.4: ein drittes Ausführungsbeispiel mit Verteilring und Vorbeschleunigungseinrichtung;
- Fig. 5: ein viertes Ausführungsbeispiel mit Spülrohr
- Fig. 6: eine doppelwandig ausgestaltete erfindungsgemässe Schubbodeneinrichtung mit Abschlussband,
- Fig. 7: eine doppelwandig ausgestaltete erfindungsgemässe Schubbodeneinrichtung mit nah aussen offen ausgebildetem Ringbereich.

Die Fig. 1a bis 1d zeigen ein aus dem Stand der Technik bekanntes Beispiel einer Doppelschubzentrifuge, das Eingangs bereits ausführlich beschrieben wurde und daher an dieser Stelle nicht mehr diskutiert werden muss.

Fig. 2 zeigt im Schnitt in einer stark schematischen Darstellung exemplarisch wesentliche Komponenten eines erstens Ausführungsbeispiels einer erfindungsgemässen Doppelschubzentrifuge. Dabei kann die Doppelschubzentrifuge der vorliegenden Erfindung zumindest für spezielle Ausführungsbeispiele als Weiterentwicklung der bekannten Doppelschubzentrifuge gemäss Fig. 1a - Fig. 1d angesehen werden, wobei der wesentliche Unterschied in dem Umfangsrichtung nicht unterbrochener Einlaufspalt zu sehen ist, der bei den bekannten Doppelschubzentrifugen fehlt.

Die erfindungsgemässe Doppelschubzentrifuge der Fig. 2, die im Folgenden gesamthaft mit dem Bezugszeichen 1 bezeichnet wird, dient zur Trennung eines Gemischs 17 in einen Feststoffkuchen 14, 15 und in eine Flüssigkeit 39.

Die Doppelschubzentrifuge 1 umfasst in an sich bekannter Weise eine um eine Rotationsachse 10 rotierbare Siebtrommel 6, in der eine Schubbodeneinrichtung 5 entlang der Rotationsachse 10 hin- und her bewegbar angeordnet ist, so dass der Feststoffkuchen 14, 15 im Betriebszustand mittels eines äusseren Ringbereichs 51 der Schubbodeneinrichtung 5 wechselseitig in der Siebtrommel 6 verschiebbar ist. Im äusseren Ringbereich 51 der Schubbodeneinrichtung 5 sind eine Mehrzahl von axialen Durchtrittsöffnungen 12 vorgesehen, die einen vorderen Bereich 151 und einen hinteren Bereich 141 der Siebtrommel 6 verbinden. Weiter ist an der Schubbodeneinrichtung eine an einer Einlaufscheibe 29 angeordnete Einspeiseeinheit 11 vorgesehen, so dass das Gemisch 17 über die Einspeiseeinheit 11 und die Einlaufscheibe 29 in den beim Verschieben des Feststoffkuchens 14, 15 auf der Siebtrommel 6 entstehenden Leerraum 16 einbringbar ist. Gemäss der vorliegenden Erfindung ist zwischen einer Einlaufkante 291 der Einlaufscheibe 29 und einer Schubbodenplatte 52 der Schubbodeneinrichtung 5 mit Einlaufbereich 500 ein in Umfangsrichtung U nicht unterbrochener Einlaufspalt 53 ausgebildet, über welchen das Gemisch 17 in den Leerraum 16 auf die Siebtrommel 6 aufbringbar ist.

Bei dem speziellen Ausführungsbeispiel der Fig. 2 ist der Einlaufspalt 53 in Form einer umlaufenden Einlaufnut 531 in der Schubbodenplatte 52 ausgebildet ist. Die Einlaufnut 531 kann z.B. in den Körper der Schubbodenplatte 52 in Umfangsrichtung U im Bereich der Durchtrittsöffnungen 12 eingefräst sein. Die Einlaufkante 291 erstreckt sich in die umlaufende Einlaufnut 531 hinein, wodurch das Gemisch 17 innerhalb der Einlaufnut 53 vorbeschleunigt werden kann und die Durchtrittsöffnungen 12 sowie weitere Komponenten entsprechend weniger stark mit Verschleiss belastet werden.

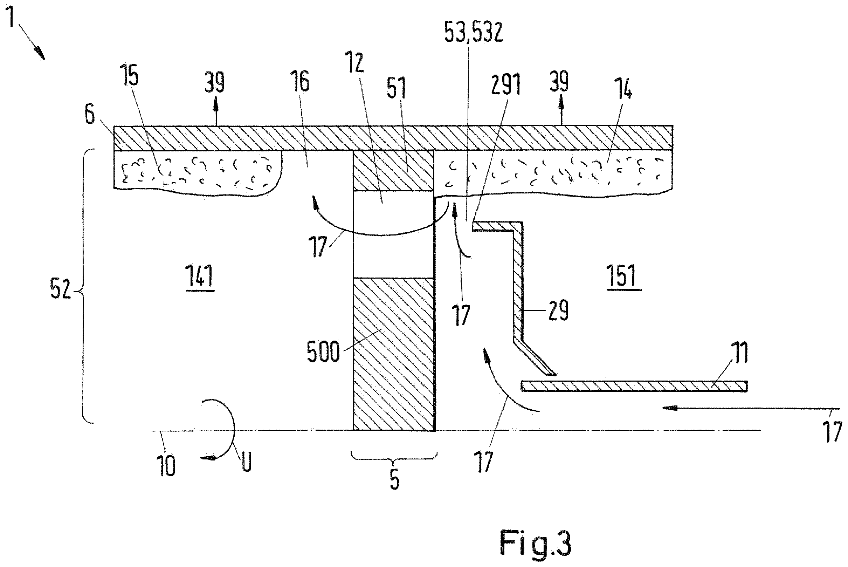

Fig. 3 zeigt ein zweites Ausführungsbeispiel einer erfindungsgemässen Doppelschubzentrifuge 1, bei welcher im Gegensatz zum Beispiel der Fig. 2 die Einlaufnut 531 fehlt und stattdessen der Einlaufspalt 53 als Abstandsspalt 532 zwischen der Einlaufkante 291 und der Schubbodenplatte 52 ausgebildet ist, wobei die übrigen Komponenten der Doppelschubzentrifuge 1 der Fig. 3 ansonsten prinzipiell analog zu den korrespondierenden Komponenten der Doppelschubzentrifuge 1 gemäss Fig. 2 ausgebildet sind.

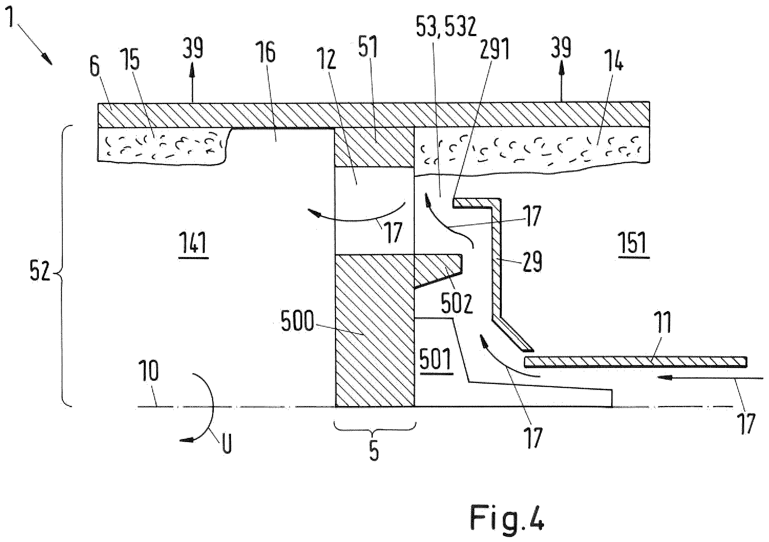

Die Fig.4 zeigt ein drittes Ausführungsbeispiel mit einem Verteilring 502 und einer Vorbeschleunigungseinrichtung 501. Die Vorbeschleunigungseinrichtung 501 dient dabei zur weiteren Verbesserung der Vorbeschleunigung des Gemischs 17 im Einlaufbereich 500 der Schubbodeneinrichtung 5. Die Flügel der Vorbeschleunigungseinrichtung 501 können dabei zum Beispiel spiralförmig ausserhalb der Einspeiseeinheit 11 ausgebildet sein. Zusätzlich ist im Einlaufbereich 500 an einem etwas grösseren Durchmesser noch ein Verteilring 502 zwischen der Vorbeschleunigungseinrichtung 501 und der Siebtrommel 6 vorgesehen. Der Verteilring 502 erlaubt dabei eine noch gleichmässigere Verteilung des Gemischs über die Schubbodenplatte 52. Es versteht sich dabei von selbst, dass in ganz speziellen Ausführungsbeispielen auch nur der Verteilring 502 oder nur die Vorbeschleunigungseinrichtung 501 vorhanden sein kann und sowohl der Verteilring 502 als auch die Vorbeschleunigungseinrichtung 501 z.B. auch bei einem Ausführungsbeispiel gemäss Fig. 2 mit Einlaufnut 531 vorteilhaft verwendet werden kann.

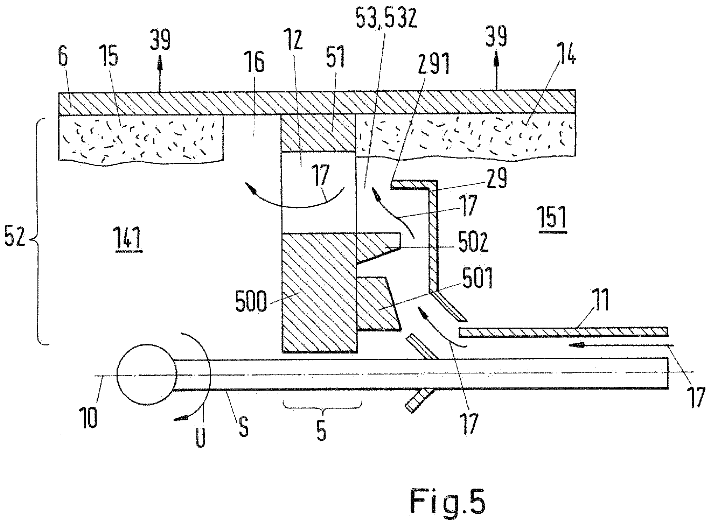

Anhand der Fig. 5 ist ein viertes erfindungsgemässes Ausführungsbeispiel mit Spülrohr S exemplarisch dargestellt, das sich zum Einbringen von Wasch- und/oder Spülflüssigkeit in die Siebtrommel 6 durch die Einspeiseeinrichtung 11 hindurch und durch die Schubbodeneinrichtung 5 vom vorderen Bereich 151 in den hinteren Bereich 141 der Siebtrommel 6 erstreckt. Hier sind jetzt die Flügel der Vorbeschleunigungseinrichtung 501 auf einem etwas grösseren Durchmesser montiert, damit noch genügend Raum für das Spülrohr S bereit steht.

Selbstverständlich kann das Spülrohr S ebenfalls bei einem Ausführungsbeispiel gemäss Fig. 2 mit Einlaufnut 531 vorteilhaft verwendet werden.

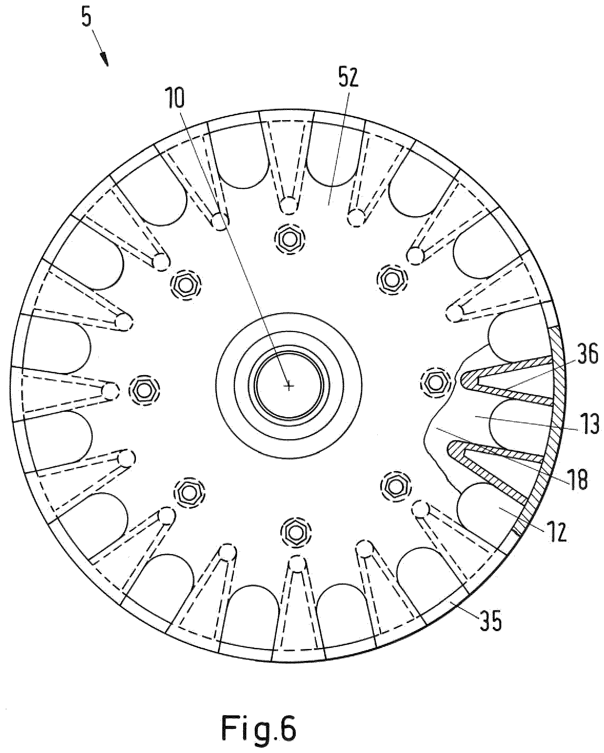

Anhand der Fig. 6 ist eine doppelwandig ausgestaltete erfindungsgemässe Schubbodeneinrichtung 1 mit Abschlussband 35 schematisch dargestellt. Zumindest der äussere Ringbereich 51 ist dabei doppelwandig ausgestaltet und in Richtung zur Siebtrommel 6 mit einem Abschlussband 35 ausgestattet. Im speziellen kann die Schubbodeneinrichtung 5 der Fig. 6 als Schweisskonstruktion ausgebildet sein, bei der die Einspeiseeinheit 11 das Gemisch 17 in der Mitte der hohlen Schubbodenplatte 52 einspeist, wobei die beiden Platten der Schubbodenplatte 52 an ihrer Peripherie über ein Abschlussband 35 verbunden sind.

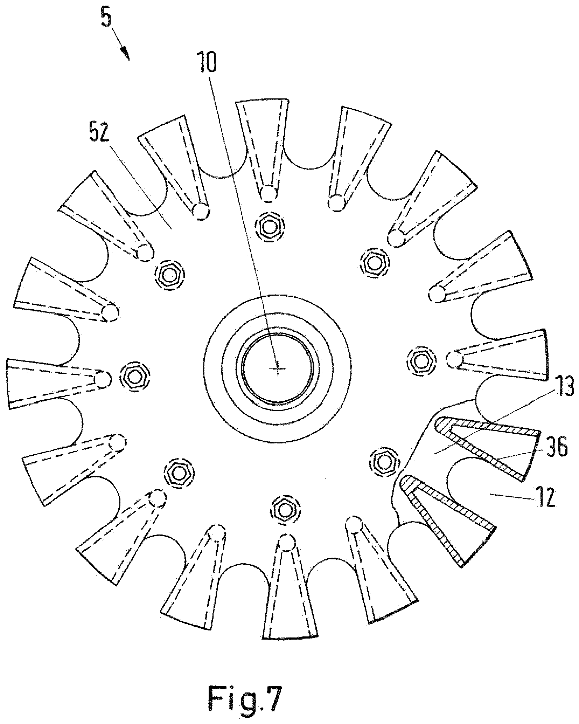

Dagegen zeigt die Fig. 7 eine doppelwandig ausgestaltete erfindungsgemässe Schubbodeneinrichtung 1 mit nach aussen offen ausgebildetem Ringbereich 51. Die Durchtrittsöffnungen 12 des doppelwandig ausgestaltete Ringbereichs 51 sind wie gut zu erkennen ist an ihrer Peripherie in Richtung zur Siebtrommel 6 offen ausgebildet, d.h. insbesondere, dass im Gegensatz zum Ausführungsbeispiel der Fig. 6 das Abschlussband 35 fehlt.

Es versteht sich von selbst, dass die Merkmale der zuvor exemplarisch beschriebenen besonders bevorzugten Ausführungsvarianten erfindungsgemässer Ausführungsbeispiel der Erfindung je nach Anforderung, in geeigneter Weise auch entsprechend beliebig vorteilhaft kombinierbar sind und der Fachmann versteht ohne weiteres, dass auch weitere, nicht erfinderische Fortbildungen vom beanspruchten Schutzumfang erfasst sind.

## Patentansprüche

1. Schubbodeneinrichtung für eine Doppelschubzentrifuge (1) zur Trennung eines Gemischs (17) in einen Feststoffkuchen (14, 15) und eine Flüssigkeit (39), wobei in einem äusseren Ringbereich (51) der Schubbodeneinrichtung (5) eine Mehrzahl von axialen Durchtrittsöffnungen (12) vorgesehen sind, die im Einbauzustand einen vorderen Bereich (151) und einen hinteren Bereich (141) einer Siebtrommel (6) der Doppelschubzentrifuge (1) verbinden, und die Schubbodenvorrichtung eine Einlaufscheibe (29) umfasst, so dass das Gemisch (17) im Betriebszustand über die Einlaufscheibe (29) in einen beim Verschieben des Feststoffkuchens (14, 15) auf der Siebtrommel (6) entstehenden Leerraum (16) einbringbar ist, **dadurch gekennzeichnet, dass** zwischen einer Einlaufkante (291) der Einlaufscheibe (29) und einer Schubbodenplatte (52) der Schubbodeneinrichtung (5) mit Einlaufbereich (500) ein in Umfangsrichtung (U) nicht unterbrochener Einlaufspalt (53) ausgebildet ist, über welchen das Gemisch (17) im Betriebs- und Einbauzustand in den Leerraum (16) auf die Siebtrommel (6) aufbringbar ist.

2. Schubbodeneinrichtung nach Anspruch 1, wobei der Einlaufspalt (53) in Form einer umlaufenden Einlaufnut (531) in der Schubbodenplatte (52) ausgebildet ist und / oder wobei der Einlaufspalt (53) als Abstandsspalt (532) zwischen der Einlaufkante (291) und der Schubbodenplatte (52) ausgebildet ist, und / oder wobei sich die Einlaufkante (291)in die Einlaufnut (531) hinein erstreckt.

3. Schubbodeneinrichtung nach einem der Ansprüche 1 oder 2, wobei zur Vorbeschleunigung des Gemischs (17) im Einlaufbereich (500) der Schubbodeneinrichtung (5) eine Vorbeschleunigungseinrichtung (501) vorgesehen ist, und im Einlaufbereich (500) bevorzugt ein Verteilring (502), insbesondere zwischen der Vorbeschleunigungseinrichtung (501) und der Siebtrommel (6) vorgesehen ist.

4. Schubbodeneinrichtung nach einem der Ansprüche1 bis 3, wobei die Schubbodeneinrichtung (5) im äusseren Ringbereich (51) doppelwandig ausgestaltet ist, oder wobei der doppelwandig ausgestaltete Ringbereich (51) in Richtung zur Siebtrommel (6) mit einem Abschlussband (35) ausgebildet ist oder wobei die Durchtrittsöffnungen (12) des doppelwandig ausgestaltete Ringbereich (51) in Richtung zur Siebtrommel (6) offen ausgebildet sind oder wobei am äusseren Ringbereich (51) Verschleissringe vorgesehen sind.

5. Doppelschubzentrifuge zur Trennung eines Gemischs (17) in einen Feststoffkuchen (14, 15) und eine Flüssigkeit (39), welche Doppelschubzentrifuge eine um eine Rotationsachse (10) rotierbare Siebtrommel (6) umfasst, in der eine Schubbodeneinrichtung (5) gemäss Anspruch 1 entlang der Rotationsachse (10) hin- und her bewegbar angeordnet ist, so dass der Feststoffkuchen (14, 15) im Betriebszustand mittels des äusseren Ringbereichs (51) der Schubbodeneinrichtung (5) wechselseitig in der Siebtrommel (6) verschiebbar ist, und eine an einer Einlaufscheibe (29) angeordnete Einspeiseeinheit (11) vorgesehen ist, so dass das Gemisch (17) über die Einspeiseeinheit (11) und die Einlaufscheibe (29) in den beim Verschieben des Feststoffkuchens (14, 15) auf der Siebtrommel (6) entstehenden Leerraum (16) einbringbar ist, wobei der Einlaufspalt (53) in Form einer umlaufenden Einlaufenden Einlaufnut (531) in der Schubbodenplatte (52) ausgebildet ist.

6. Doppelschubzentrifuge nach Anspruch 5, wobei der Einlaufspalt (53) als Abstandsspalt (532) zwischen der Einlaufkante (291) und der Schubbodenplatte (52) ausgebildet ist.

7. Doppelschubzentrifuge nach einem der Ansprüche 5 oder 6, wobei sich die Einlaufkante (291) in die Einlaufnut (531) hinein erstreckt.

8. Doppelschubzentrifuge nach einem der Ansprüche 5 bis 7, wobei zur Vorbeschleunigung des Gemischs (17) im Einlaufbereich (500) der Schubbodeneinrichtung (5) eine Vorbeschleunigungseinrichtung (501) vorgesehen ist.

9. Doppelschubzentrifuge nach einem der Ansprüche 5 bis 8, wobei im Einlaufbereich (500) ein Verteilring (502), insbesondere zwischen der Vorbeschleunigungseinrichtung (501) und der Siebtrommel (6) vorgesehen ist.

10. Doppelschubzentrifuge nach einem der Ansprüche 5 bis 9, wobei sich ein Spühlrohr (S) zum Einbringen von Wasch- und/oder Spülflüssigkeit in die Siebtrommel durch die Einspeiseeinrichtung (11) hindurch und durch die Schubbodeneinrichtung (5) vom vorderen Bereich (151) in den hinteren Bereich (141) der Siebtrommel (6) erstreckt.

11. Doppelschubzentrifuge nach einem der Ansprüche 5 bis 10, wobei die Schubbodeneinrichtung (5) im äusseren Ringbereich (51) doppelwandig ausgestaltet ist.

12. Doppelschubzentrifuge nach Anspruch 11, wobei der doppelwandig ausgestaltete Ringbereich (51) in Richtung zur Siebtrommel (6) mit einem Abschlussband (35) ausgebildet ist.

13. Doppelschubzentrifuge nach einem der Ansprüche 11 oder 12, wobei die Durchtrittsöffnungen (12) des doppelwandig ausgestaltete Ringbereich (51) in Richtung zur Siebtrommel (6) offen ausgebildet sind.

14. Doppelschubzentrifuge nach einem der Ansprüche 5 bis 13, wobei dass am äusseren Ringbereich (51) Verschleissringe vorgesehen sind.

## Claims

1. A pusher base device for a double-action pusher centrifuge (1) for separating a mixture (17) into a solid cake (14, 15) and into a liquid (39), wherein a plurality of axial passage openings (12) are provided in an outer ring region (51) of the pusher base device (5) which connect a front region (151) and a rear region (141) of a screen drum (6) of the double-action pusher centrifuge (1) in the installed state and the pusher base device comprises an inflow disk (29) so that the mixture (17) can be introduced into an empty space (16) arising on the screen drum (6) on a displacement of the solid cake (14, 15) in the operating state, **characterized in that** an inflow gap (53) which is not interrupted in the peripheral direction (U) and via which the mixture (17) can be applied into the empty space (16) on the screen drum (6) is formed between an inflow edge (291) of the inflow disk (29) and a pusher base plate (52) of the pusher base device (5) with an inflow region (500).

2. A pusher base device in accordance with claim 1, wherein the inflow gap (53) is configured in the form of a peripheral inflow groove (531) in the pusher base plate (52); and/or wherein the inflow gap (53) is configured as a spacing gap (532) between the inflow edge (291) and the pusher base plate (52); and/or wherein the inflow edge (291) extends into the inflow groove (531).

3. A pusher base device in accordance with one of the claims 1 or 2, wherein a preacceleration device (501) is provided in the inflow region (500) of the pusher base device (5) for preaccelerating the mixture (17) and a distribution ring (502) is preferably provided in the inflow region (500), in particular between the preacceleration device (501) and the screen drum (6).

4. A pusher base device in accordance with any one of the claims 1 to 3, wherein the pusher base device (5) has a double-wall design in the outer ring region (51); or wherein the ring region (51) of double-wall design is configured with a termination band (35) in the direction toward the screen drum (6), or wherein the passage openings (12) of the ring region (51) of double-wall design are open in the direction toward the screen drum (6); or wherein wear rings are provided at the outer ring region (51).

5. A double-action pusher centrifuge for separating a mixture (17) into a solid cake (14, 15) and into a liquid (39), which double-action pusher centrifuge comprises a screen drum (6) which is rotatable about an axis of rotation (10) and in which a pusher base device (5) according to claim 1 is arranged movable to and fro along the axis of rotation (10) so that the solid cake (14, 15) is alternately displaceable in the screen drum (6) by means of an outer ring region (51) of the pusher base device (5) in the operating state, wherein a plurality of axial passage openings (12) are provided in the outer ring region (51) of the pusher base device (5) which connect a front region (151) and a rear region (141) of the screen drum (6) and wherein a feed unit (11) arranged at an inflow disk (29) is provided such that the mixture (17) can be introduced via the feed unit (11) and the inflow disk (29) into the empty space (16) arising on the screen drum (6) on a displacement of the solid cake (14, 15), **characterized in that** an inflow gap (53) which is not interrupted in the peripheral direction (U) and via which the mixture (7) can be applied into the empty space (16) on the screen drum (6) is formed between an inflow edge (291) of the inflow disk (29) and a pusher base plate (52) of the pusher base device (5) with an inflow region (500), wherein the inflow gap (53) is configured in the form of a peripheral inflow groove (531) in the pusher base plate (52).

6. A double-action pusher centrifuge in accordance with claim 5, wherein the inflow gap (53) is formed as a spacing gap (532) between the inflow edge (291) and the pusher base plate (52).

7. A double-action pusher centrifuge in accordance with any one of the claims 5 or 6, wherein the inflow edge (291) extends into the inflow groove (531).

8. A double-action pusher centrifuge in accordance with any one of the claims 5 to 7, wherein a preacceleration device (501) is provided for preaccelerating the mixture (17) in the inflow region (500) of the pusher base device (5).

9. A double-action pusher centrifuge in accordance with any one of the claims 5 to 8, wherein a valve ring (502) is provided in the inflow region (500), in particular between the preacceleration device (501) and the screen drum (6).

10. A double-action pusher centrifuge in accordance with any one of the claims 5 to 9, wherein a flushing pipe (S) extends into the screen drum through the feed device (11) and through the pusher base device (5) form the front region (151) into the rear region (141) of the screen drum (6) for the introduction of washing and/or flushing liquid into the screen drum.

11. A double-action pusher centrifuge in accordance with any one of the claims 5 to 10, wherein the pusher base device (5) is of double-wall design in the outer ring region (51).

12. A double-action pusher centrifuge in accordance with claim 11, wherein the ring region (51) of double-wall design is configured with a termination band (35) in the direction toward the screen drum (6).

13. A double-action pusher centrifuge in accordance with one of the claims 11 or 12, wherein the passage openings (12) of the ring region (51) of double-wall design are open in the direction toward the screen drum (6).

14. A double-action pusher centrifuge in accordance with any one of the claims 5 to 13, wherein wear rings are provided at the outer ring region (51).

## Revendications

1. Un dispositif de fond de poussée pour une centrifugeuse à poussoir double (1) pour séparer un mélange (17) en un gâteau de matière solide (14, 15) et un liquide (39), dans lequel une pluralité d'ouvertures de passage axiales (12) est prévue dans une région annulaire extérieure (51) du dispositif de fond de poussée (5), qui relient à l'état d'installation, une région avant (151) et une région arrière (141) d'un tambour de tamisage (6) de la centrifugeuse à poussoir double (1), et dans lequel le dispositif de fond de poussée comprend un disque d'entrée (29) de sorte que le mélange (17) peut être introduit à l'état de fonctionnement par le disque d'entrée (29) dans un espace vide (16) créé lorsque le gâteau de matière solide (14, 15) est déplacé sur le tambour de tamisage (6), **caractérisé en ce qu'**une fente d'entrée (53) est formée qui n'est pas interrompue dans la direction circonférentielle (U) entre un bord d'entrée (291) du disque d'entrée (29) et une plaque de fond de poussée (52) du dispositif de fond de poussée (5) avec une région d'entrée (500), par laquelle fente d'entrée le mélange (17) peut être appliqué sur le tambour de tamisage (6) dans l'espace vide (16) à l'état de fonctionnement et d'installation.

2. Un dispositif de fond de poussée selon la revendication 1, dans lequel la fente d'entrée (53) est conçue sous la forme d'une rainure d'entrée (531) circonférentielle dans la plaque de fond de poussée (52) et / ou dans lequel la fente d'entrée (53) est conçue comme une fente de distance (532) entre le bord d'entrée (291) et la plaque de fond de poussée (52) et / ou dans lequel le bord d'entrée (291) s'étend dans la rainure d'entrée (531).

3. Un dispositif de fond de poussée selon l'une des revendications 1 ou 2, dans lequel un dispositif de pré-accélération (501) est prévu pour pré-accélérer le mélange (17) dans la région d'entrée (500) du dispositif de fond de poussée (5) et un anneau de distribution (502) est prévu de préférence dans la région d'entrée (500), en particulier entre le dispositif de pré-accélération (501) et le tambour de tamisage (6).

4. Un dispositif de fond de poussée selon l'une des revendications 1 à 3, dans lequel le dispositif de fond de poussée (5) est conçu à paroi double dans la région annulaire extérieure (51), ou dans lequel la région annulaire (51) à double paroi est conçue avec une courroie d'extrémité (35) dans la direction du tambour de tamisage (6) ou dans lequel les ouvertures de passage (12) de la région annulaire (51) à paroi double sont ouverts dans la direction du tambour de tamisage (6) ou dans lequel des bagues d'usure sont prévues sur la région annulaire extérieure (51).

5. Une centrifugeuse à poussoir double pour séparer un mélange (17) en un gâteau de matière solide (14, 15) et un liquide (39), la centrifugeuse à poussoir double comprenant un tambour de tamisage (6) pouvant tourner autour d'un axe de rotation (10), dans quel tambour de tamisage (6) un dispositif de fond de poussée (5) selon la revendication 1 est disposé pour se déplacer en avant et en arrière le long de l'axe de rotation (10), de sorte que le gâteau de matière solide (14, 15) est déplaçable alternativement dans le tambour de tamisage (6) à l'état de fonctionnement au moyen de la région annulaire extérieure (51) du dispositif de fond de poussée (5) et une unité d'alimentation (11) disposée sur un disque d'entrée (29) est prévue, de sorte que le mélange (17) peut être introduit par l'unité d'alimentation (11) et le disque d'entrée (29) dans l'espace vide (16) créé lorsque le gâteau de matière solide (14, 15) est déplacé sur le tambour de tamisage (6), dans lequel la fente d'entrée (53) est conçue sous la forme d'une rainure d'entrée circonférentielle (531) dans la plaque de fond de poussée (52).

6. Une centrifugeuse à poussoir double selon la revendication 5, dans lequel la fente d'entrée (53) est conçue comme une fente de distance (532) entre le bord d'entrée (291) et plaque de fond de poussée (52).

7. Une centrifugeuse à poussoir double selon l'une des revendications 5 ou 6, dans lequel le bord d'entrée (291) s'étend dans la rainure d'entrée (531).

8. Une centrifugeuse à poussoir double selon l'une des revendications 5 à 7, dans lequel un dispositif de pré-accélération (501) est prévu pour pré-accélérer le mélange (17) dans la région d'entrée (500) du dispositif de fond de poussée (5).

9. Une centrifugeuse à poussoir double selon l'une des revendications 5 à 8, dans lequel un anneau de distribution (502) est prévu dans la région d'entrée (500), en particulier entre le dispositif de pré-accélération (501) et le tambour de tamisage (6).

10. Une centrifugeuse à poussoir double selon l'une des revendications 5 à 9, dans lequel un tube de rinçage (S) pour l'introduction du liquide de lavage et / ou de rinçage dans le tambour de tamisage (6) s'étend à travers l'unité d'alimentation (11) et à travers le dispositif de fond de poussée (5) à partir de la région avant (151) jusqu'à la région arrière (141) du tambour de tamisage (6).

11. Une centrifugeuse à poussoir double selon l'une des revendications 5 à 10, dans lequel le dispositif de fond de poussée (5) est conçu à paroi double dans la région annulaire extérieure (51).

12. Une centrifugeuse à poussoir double selon la revendication 11, dans lequel la région annulaire (51) à double paroi est conçue avec une courroie d'extrémité (35) dans la direction du tambour de tamisage (6).

13. Une centrifugeuse à poussoir double selon l'une des revendications 11 ou 12, dans lequel les ouvertures de passage (12) de la région annulaire (51) à paroi double sont ouverts dans la direction du tambour de tamisage (6).

14. Une centrifugeuse à poussoir double selon l'une des revendications 5 à 13, dans lequel des bagues d'usure sont prévues sur la région annulaire extérieure (51).
